# EUROPEAN PATENT APPLICATION

(11) **EP 2 703 264 A1**
(43) Date of publication of application: **05.03.2014**
(21) Application number: 13182031.8
(22) Date of filing: 28.08.2013
(51) Int. Cl.: B62J 6/06

(54) **Eddy current generator for bicycles**

(30) Priority: 28.08.2012 EP 12182032
(71) Applicant: Reelight APS, 8260 Viby J (DK)
(72) Inventor: Linnebjerg, Kenneth, 8370 Hadsten (DK)
(74) Representative: Plougmann & Vingtoft A/S

(57) **Abstract**

The invention relates to an electrical generator for bicycles and similar vehicles. The generator includes a moveable magnet part which will generate an induction current in a coil when the magnet part moves. The generator is configured to be mounted near an electrical conducting part of the bicycle. The electrical conducting part, e.g. a rim, is rotatably arranged with the bicycle. When the electrical conducting part rotates the magnetic field from the magnet part will generate eddy current in the electrical conducting part. The eddy current will generate a magnetic field which will force the magnet part to move, e.g. rotate. Thus, an electrical current will be generated in the coil when the electrical conducting part rotates.

## Description

### FIELD OF THE INVENTION

The invention relates to electrical induction generators, in particular to electrical induction generators for bicycles.

### BACKGROUND OF THE INVENTION

It is an object of the present invention to provide a bicycle generator capable of generating relatively large electrical power, e.g. for powering high intensity bicycle lights. It is another object of the invention to provide a bicycle generator which is easy to mount to the bicycle and which has a simple design.

WO0133700 discloses an electricity generating device for a vehicle comprising at least a first and a second part that is moveable in relation to each other. The electricity generating device comprises at least one coil being attached to the first part, and the coil comprises a core, layers of windings and a first and a second electrical output to which light emitting means may be connected. One or more first magnets are attached to said first part for creating a magnetic flux through the coil, and one or more metallic elements are attached to said second part. Thus, a current may be induced in the coil when the size of the magnetic flux passing through the coil is changed by moving the second part in relation to the first part, or vice versa, so that the metallic elements pass said first magnet(s).

EP2178738 discloses a generator for a bicycle. The generator has a driving magnet fixed to a wheel of the bicycle and an induction structure which is fixed to the frame of the bicycle. The induction structure comprises an induction magnet which is movably fixed to a coil. A fixture allows fixing of the magnets at locations where they, during normal operation of the bicycle, repeatedly moves towards and away from each other so that the driving magnet moves the induction magnet relative to the coil. To provide a generator which can potentially deliver a uniform output which is less dependent on a very specific installation of the generator, on the bicycle and which may therefore be easy to install, the generator further comprises a resetting magnet which provides positioning of the induction magnet relative to the coil when the driving magnet moves away from the induction magnet.

Whereas WO0133700 and EP2178738 disclose generators which may be capable of generating large electrical power, the inventor of the present invention has appreciated that an improved generator would be of benefit, and has in consequence devised the present invention.

### SUMMARY OF THE INVENTION

It would be advantageous to achieve improvements for bicycle generators. In particular it may be seen as an object of the present invention to provide a bicycle generator capable of generating a high electrical power output, and to provide a generator which is simple, consists of few components and which is easy to mount on a bicycle. Thus, it may be seen as an object of the present invention to provide a method that solves the above mentioned problems, or other problems, of the prior art.

To better address one or more of these concerns, in a first aspect of the invention a generator for a bicycle is presented that comprises:
- a coil of electrically conducting wire,
- a magnet part comprising one permanent magnetic north pole and one permanent magnetic south pole where the poles generate a magnetic field, wherein
- the magnet part is moveably arranged relative to the coil so that the coil will be able to generate an electric current when exposed to a change in a magnetic field from the magnet part when the magnet part moves, and wherein
- the generator is configured for mounting adjacent to an electrically conducting moveable part of the bicycle so that the movable part is able to guide at least a part of the magnetic field from the magnet part in such a way that eddy currents are generated in the moveable part when the moveable part moves relative to the magnet part and so that a magnetic field generated by the eddy currents will interact with the magnetic north and south poles in such a way that the magnet part is forced to move.

Accordingly, the generator is configured so that it advantageously exploits the presence of an electrically conducting moveable part of the bicycle, e.g. the rim, for generation of electric current. Accordingly, the electrically conducting moveable part serves two functions: A primary function and a secondary function, where the primary function is different from the secondary function being the guiding of the part of the magnetic field. As an advantage, the generator may be made simpler and more compact since the electrically conducting part is not part of the generator but is part of the bicycle. As another advantage, mounting of the generator may be simpler than other bicycle generators since only one part need to be fixed to the bicycle since the electrically conducting part is already present.

It is understood that the magnet part may comprise one or more permanent magnetic north poles and one or more permanent magnetic south poles.

In an embodiment the electrically conducting moveable part is ring or disc shaped and configured so that when the moveable part moves relative to the magnet part the moveable part will always guide a part of the magnetic field independent of the position of the moveable part.

Since the electrically conducting moveable part may have a structure which is unbroken along a circular path, eddy currents will be generated continuously in time as long as the electrically conducting moveable part moves and, therefore, the generator will be able to generate an AC current which is continuous in time, i.e. periods where no current is generated will not (or substantially not) be present as long as the electrically conducting moveable part moves.

Accordingly, it may not be necessary to utilize electrical energy storage electronics for powering electrical consumers, e.g. lights, during periods wherein no electrical current is generated.

For example, the electrically conducting moveable part may be a rim of a wheel of the bicycle or a disc of a brake disc attachable to the wheel of the bicycle.

It may be particularly advantageous to utilize the brake disc since such a disc enables the magnet part to be fixed with a small axial distance from the brake disc since such a disc normally is manufactured with low tolerances so that the disc does not fluctuate much in the axial direction. The small axial distance may enable generation of higher electrical currents since magnetic losses in the air gap between the magnet part and the electrically conducting moveable part are minimized. On the other hand it may also be advantageous to utilize the rim of a wheel since the large diameter of the rim generates a high motion speed of the electrically conducting moveable part. The power generated by the generator tends to increase with increasing motion speed of the electrically conducting moveable part - at least as long as hysteresis losses in magnetically conducting material are not significant.

In an embodiment the magnet part is rotatably fixed relative to the coil by a fixed rotation axis so that the magnetic field generated by the eddy currents will interact with the magnetic north and south poles in such a way that the magnet part is forced to rotate when the movable part moves. For example, the generator may be configured in a housing to which the coil is fixed and the magnet part is rotatably fixed - so that the magnet part is rotatably fixed relative to the coil. The housing may comprise an opening through which the movable part may protrude so that it can interact with the electrically conducting part. Alternatively, the generator may be configured so that the housing provides a watertight enclosure for the coil and magnet part - in this case the magnet part may interact with the electrically conducting part via a part, e.g. a shell, of the housing which may be made so thin, e.g. 0.5 mm thick, so that magnetic losses in the shell are insignificant or substantially insignificant.

In an embodiment the generator comprises an element of magnetically conducting material arranged to guide the magnetic field between the north and south poles of the magnet part, where the winding of the coil are wound around a part of the element of magnetically conductive material.

In another embodiment the winding of the coil is wound directly around the magnet part so that the magnetic field is only guided by air from the magnet part to the coil. In this embodiment magnetically conducting material may not be used and, therefore, this embodiment may be particularly advantageous for configurations of the generator where the magnet part moves with a high speed, e.g. wherein rotatable magnet parts with a small diameter are utilized. That is, magnet parts that move with a high speed tend to generate magnetic hysteresis losses in the magnetically conducting material and, therefore, air guidance of the magnetic field between the magnet part and the coil (i.e. a coil with a core of air) may be advantageous for optimizing the electrical energy production.

In an embodiment the generator comprises first and second magnet parts rotatably fixed relative to the coil by respective first and second fixed rotation axes. The generation of variations in the magnetic field from the magnet part may advantageously be distributed among a plurality of magnet parts. By use of two or more rotatable magnet parts each of the magnet parts may be made smaller than a corresponding single magnet part. For example, a single magnet part with a weight A of the magnetic material may be substituted by two smaller magnet parts each with a weight A/2 or less while maintaining the same electrical power production capability. Furthermore, smaller magnet parts may facilitate specific shaping of the generator since the plurality of magnet parts may be located as needed. For example, the magnet parts may be located so that the shape of the generator can be integrated or combined with a brake pad or brake shoe for a bicycle brake.

In an embodiment the generator is configured for mounting adjacent to the electrically conducting moveable part so that eddy currents are generated at first and second locations in the moveable part adjacent to the respective first and second magnet parts when the moveable part moves relative to the magnet parts

In an embodiment the coil is arranged between the first and second magnet parts. By arranging the coil between to magnet parts with opposite poles so that the magnetic field passes directly through the coil-core, the coil may experience enlarged magnetic field variations.

In an embodiment the generator comprises an element of magnetically conducting material arranged to guide the magnetic field between a pole of the first magnetic part and a pole (possibly of opposite magnetic polarity) of the second magnetic part, where the winding of the coil are wound around a part of the magnetically conducting material.

In an embodiment the element of magnetically conducting material is U-shaped or E-shaped, where the U-shaped or E- magnetically conducting material is U-shaped or E-shaped element comprises at least two legs and a connector connecting the two legs, where the U-shaped or E-shaped element is arranged to guide the magnetic field from the first magnetic part via one of the legs to the second magnetic part via the other leg or one of the remaining legs, and where:
a) the winding of the coil is wound around the connector, or
b) the winding of a first coil is wound around one of the legs or a part of the connector and the winding of a second coil is wound around the other leg or another part of the connector.

By use of U-shaped or E-shaped magnetically conducting material the coil may advantageously be located remote from moveable part which may be useful for particular designs of the generator.

The generator may be configured so that the magnet part has a minimum distance of 1 to 5 mm to the moving part, and so that the magnet part has a minimum distance of 0.3 to 0.8 mm to the magnetically conducting material. Thus, the distance between the magnet part and the moving part may be selected to be larger than the distance between the magnet part and the magnetically conducting material.

A second aspect of the invention relates to a bicycle light, comprising
- a generator for a bicycle according to the first aspect, and
- a light source.

In an embodiment of the bicycle light the light source is integrated with the generator in a common housing and the bicycle light is configured so that at least a part of the light from the light source is able to illuminate a wheel component. When the generator is located adjacent to the rim, illumination of the rim is easily obtainable since the light source may be configured to direct at least a part of the generated light towards the rim or tire. The illumination of the rim may provide decorative light effects and/or additional safety/visibility.

A third aspect of the invention relates to a generator system comprising:
- a generator for a bicycle according to the first aspect,
- a fixation for fixing the generator so that the magnet part is located adjacent to the moving part when fixated.
   A fourth aspect of the invention relates to a brake shoe for a bicycle brake, comprising
- a generator according to the first aspect,
- a fixation for fixing the brake shoe to the bicycle brake.

A fifth aspect of the invention relates to a bicycle or bicycle part, comprising,
- a generator according to the first aspect, and
- a moving part according to the first aspect.

A sixth aspect of the invention relates to a method for producing electric power on a bicycle wherein the method comprises
- fixing a generator to a bicycle, the generator comprises
   - a coil of electrically conducting wire,
   - a magnet part comprising one permanent magnetic north pole and one permanent magnetic south pole where the poles generate a magnetic field, wherein
   - the magnet part is moveably arranged relative to the coil so that the coil will be able to generate an electric current when exposed to a change in a magnetic field from the magnet part when the magnet part moves, and wherein
   - the generator is configured for mounting adjacent to an electrically conducting moveable part of the bicycle so that the movable part is able to guide a part of the magnetic field from the magnet part,
- operating the bicycle so that the movable part moves relative to the magnet part whereby eddy currents are generated in the moveable part and whereby a magnetic field generated by the eddy currents interacts with the magnetic north and south poles in such a way that the magnet part is forced to move.

In summary the invention relates to an electrical generator for bicycles and similar vehicles. The generator includes a moveable magnet part which will generate an induction current in a coil when the magnet part moves. The generator is configured to be mounted near an electrical conducting part of the bicycle. The electrical conducting part, e.g. a rim, is rotatably arranged with the bicycle. When the electrical conducting part rotates the magnetic field from the magnet part will generate eddy currents in the electrical conducting part. The eddy currents will generate a magnetic field which will force the magnet part to move, e.g. rotate. Thus, an electrical current will be generated in the coil when the electrical conducting part rotates.

In general the various aspects of the invention may be combined and coupled in any way possible within the scope of the invention. These and other aspects, features and/or advantages of the invention will be apparent from and elucidated with reference to the embodiments described hereinafter.

### BRIEF DESCRIPTION OF THE DRAWINGS

Embodiments of the invention will be described, by way of example only, with reference to the drawings, in which
Fig. 1a-1c illustrate different orientations of a magnet part 120 in a generator 100,
Fig. 2 illustrates a generator 100 with a linearly moveable magnet 202,
Fig. 3a illustrates a generator 100 using a coil 101 with a core of magnetically conducting material 301,
Fig. 3b illustrates a generator 100 using a coil 101 with a core of air where the coil is wound around the magnet part, e.g. so that the axial direction of the coil is perpendicular to the axial direction of the rotatable magnet part 102,
Fig. 4 illustrates a generator 100 comprising two rotatable magnet parts 402, 403, wherein the coil may be located between the two magnet parts,
Fig. 5a and 5b illustrate u-shaped and E-shaped structures of magnetically conducting material for guiding the varying magnetic field from magnet parts through the coil,
Fig. 6a and 6b illustrate different configurations of the rotatable magnet part,
Fig. 7 illustrates a bicycle 701 with a generator fixed to the bicycle, and
Fig. 8 illustrates integration of the generator 100 with a brake pad 801.

### DETAILED DESCRIPTION OF AN EMBODIMENT

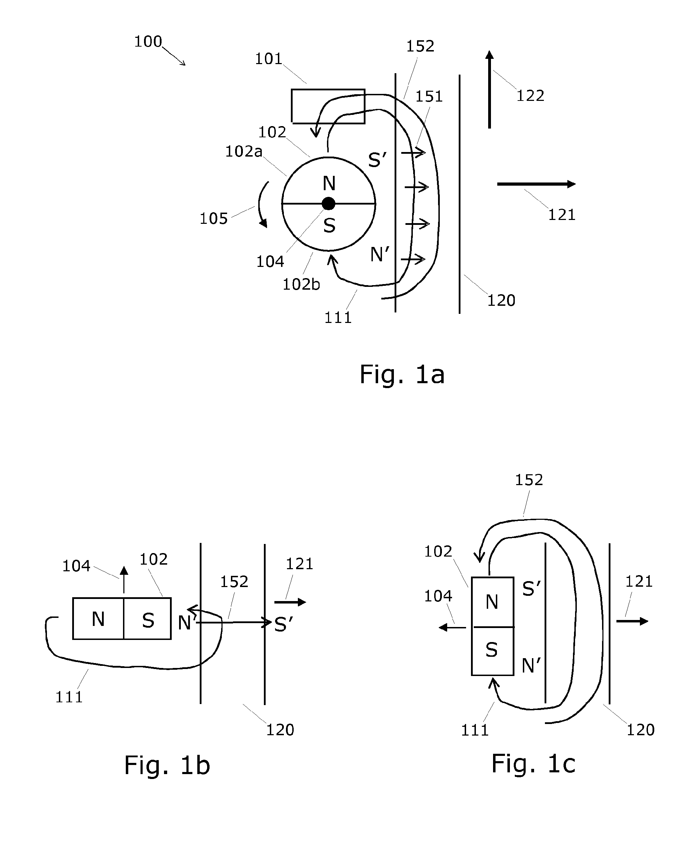

Fig. 1a shows an embodiment of a generator 100 for a bicycle. The generator is capable of generating electric current for powering various electrical consumers of the bicycle, e.g. one or more lights, a bicycle computer and/or a charger or powering unit for digital equipment such as a mobile computer or mobile phone.

The generator 100 comprises a coil 101 of electrically conducting wire which is configured to supply current generated in the coil to an electrical consumer or power storage electronics.

The generator 100 further comprises a magnet part 102 comprising at least one permanent magnetic north pole N, 102a and at least one permanent magnetic south pole S, 102b. The poles generate a magnetic field 111 directed form the north pole to the south pole.

The magnet part 102 is moveably arranged relative to the coil. In Fig. 1a the magnet part 102 is rotatably fixed relative to the coil 101 via a fixed hinge axis 104.

The coil 101 is arranged relative to the magnet part 102 so that the coil is able to generate an electric current when exposed to a change in the magnetic field 111 from the magnet part 102. The changes in the magnetic field from the magnet part 102 are generated when the magnet part 102 moves, e.g. rotates.

The magnet part 102 is configured for mounting adjacent to an electrically conducting moveable part 120 of the bicycle so that the movable part 120 is able to guide a part of the magnetic field 111 from the magnet part 102. In addition to being electrically conductive, the movable part 120 may be made of non-ferromagnetic material (e.g. carbon fiber or aluminum) or ferromagnetic material (e.g. iron or some types of steel).

The movable part 120 may be the rim of a wheel of the bicycle, a brake disc of a bicycle disc-brake or other ring or disc shaped structure being part of the bicycle or connectable with the bicycle. Like the rim or brake disc, the movable part 120 rotates around a rotation axis 121 when the bicycle is operated, i.e. when the cyclist drives the bicycle, so that the moveable part moves in direction 122 relative to the magnet part 102.

The moveable part 120 may have a continuous or unbroken (or substantially continuous or unbroken) structure so that - when the magnet part 102 is mounted on the bicycle adjacent to the moveable part 120 - the moveable part 120 will always be able to guide a part of the magnetic field 111 independent of the position of the moveable part. Even though e.g. a rim may be discontinuous at a connection point or a brake-disc may have ventilation holes, the moveable part may both be able to guide the magnetic field or part of the field continuously in time as the bicycle is operated and to guide the magnetic field 111 between the poles of the magnet part 102 independent of the position of the moveable part.

The electrically conducting moveable part 120 may be a part of the bicycle (e.g. a rim or disc of a disc-brake connectable with the bicycle) which primary purpose/function is different than a secondary purpose/function which is the guiding of the part of the magnetic field 111. Thus, the primary function of the rim is to provide a wheel, whereas the secondary function of the rim is to act as a part of the generator 100 by providing a magnetic pathway between the magnetic poles of the magnet part 102.

When the moveable part 120 moves relative to the magnet part 102 eddy currents 151 are generated in the moveable part. The eddy currents flow in circular patterns within the electrical conductive material of the moveable part. The eddy currents will generate a magnetic field 152 which will interact with the magnetic north and south poles 102a, 102b of the magnet part 102 in such a way that the magnet part is forced to move, e.g. to rotate in direction 105.

The direction of the eddy current can be determined according to Lenz's law. That is, the eddy currents 151 will have a direction so that the magnetic field 152 opposes the change of magnetic field 111 which generates the eddy current.

Since the moveable part 120 moves in the direction 122 the magnetic field 111 in the moveable part 120 will continuously change as new un-magnetized material becomes magnetized by the magnetic field 111. Accordingly, an opposing magnetic field 152 is continuously generated so that the magnet part 102 is continuously driven to rotate. That is, since the magnet part 102 continuously moves, the magnetic fields 111, 152 will continuously change direction and amplitude and the continuous change of the magnetic fields 111, 152 are able to continuously drive the magnet part 102. In turn, the strength and direction of the magnetic field 111 extending from the north pole 102a to the south pole 102b will vary and generate electromagnetic induction in the coil 101.

The rotation direction 105 of the magnet part 102 is given by the direction of movement 122 of the moveable part 120. Consider the situation where the rotationally hinged magnet part 102 has an angular position so that the south pole 102b faces the moveable part 120. Eddy currents 151 will be generated which have a direction to generate a magnetic field 152 having a direction for opposing the change of magnetic field 111 which generated the eddy current. Therefore, the eddy current will generate a north pole N' which attracts the south pole S, 102b in an attempt to stop rotation of the magnet part 102. However, since the moveable part 120 moves in direction 122, the magnet part 102 will be forced to rotate clockwise in direction 105 due to the attraction between the south pole of the magnet part 102 and the north pole of the moveable part 120.

In Fig. 1a the rotation axis 104 of the magnet part 102 is perpendicular or substantially perpendicular to the rotation direction 121 and parallel or substantially parallel with the radial direction of the circular or disc shaped moveable part 120. Fig. 1b shows an embodiment where the rotation axis 104 of the magnet part 102 is perpendicular or substantially perpendicular to the rotation direction 121 and perpendicular or substantially perpendicular with the radial direction of the circular or disc shaped moveable part 120. Fig. 1c shows an embodiment where the rotation axis 104 of the magnet part 102 is parallel or substantially parallel to the rotation direction 121 and perpendicular or substantially perpendicular with the radial direction of the circular or disc shaped moveable part 120. Experiments have shown that a generator with any of the orientations of the magnet part 102 in Figs. 1a-1c is capable of generating electric current.

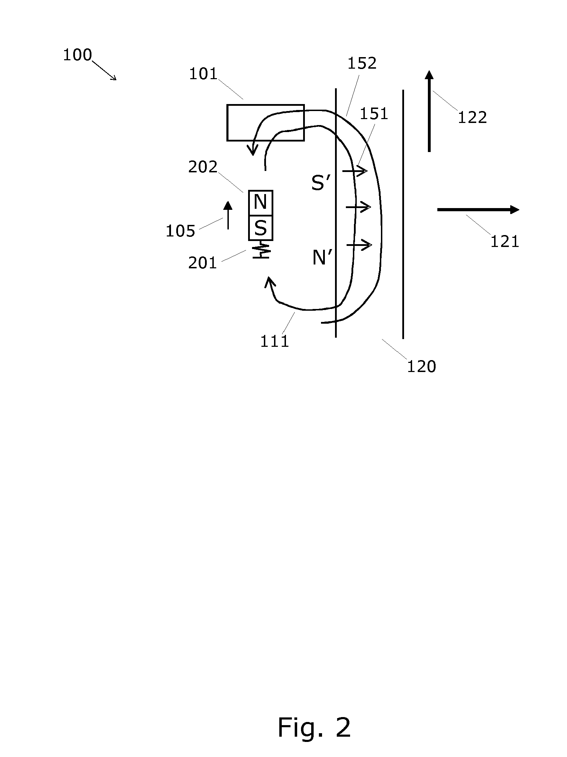

Fig. 2 shows an embodiment equivalent to the embodiment in Fig. 1 wherein the magnet part 202 is connected to an elastic element such as a spring 201 so that the magnet part 202 is able to reciprocate linearly along the direction 105. Thus, as the moveable part 120 moves in direction 122 the magnetic field 152 generated by the eddy currents 151 in response to the magnetic field 111 from the magnet part 202 will have a direction opposite to the direction of the magnetic field 111 in an attempt to stop movement of the moveable part 120. However, since the moveable part 120 continues to move due to the driving force of the bicycle, the magnetic poles N', S' of the magnetic field 152 causes the magnet part to move with moveable part until tension of the elastic element 105 causes the magnet part 202 to move back. The oscillation of the magnet part 202 generates an induction current in the coil 101.

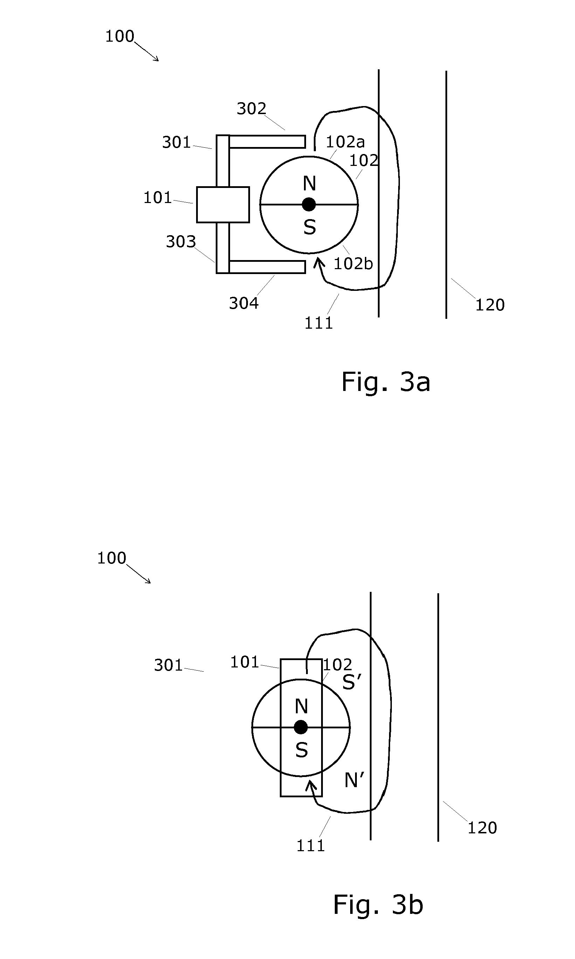

Fig. 3a shows an embodiment of the generator 100 which additionally comprises an element 301 of magnetically conducting material such as iron arranged to guide the magnetic field between the north and south poles 102a, 102b of the magnet part 102. The winding of the coil 101 are wound around a part of the magnetically conduction material so that the element 301 acts as a core for the coil.

The element 301 of magnetically conducting material may be U-shaped, where the U-shaped element comprises two legs 302, 304 and a connector 303 connecting the two legs. The winding of the coil 101 may be wound around the connector or around one of the legs. In an embodiment the generator 100 comprises two or more coils. For example, a first coil may be wound around a first leg 302 and a second coil may be wound around a second leg 304. The coils may be coupled in series or in parallel.

The generators 100 in Figs. 1a-c may be configured with two or more coils. For example, the generator in Fig. 1a may be provided with a coil above the magnet part 102 (as shown in the plane of the paper), and/or with a coil below the magnet part 102, and/or with a magnet part 102 to the left of the magnet part 102. To possibility to use one or more coils in a generator 100 configured with one or more magnet parts, applies to any embodiment described herein. The use of a plurality of coils may enable generation of more electrical power since variations in the magnetic field from the magnet part 102 may be utilized more efficiently.

Fig. 3b shows an embodiment of the generator 100 where the winding of the coil 101 are wound around the magnet part. When the winding of the coil 101 are wound around the magnet part, the coil may be arranged close to the magnet part 102 to avoid or minimize magnetic losses and to achieve a compact design. Thus, the embodiment of Fig. 3b is **characterized in that** the magnetic field from the magnetic poles of the magnet part 102 is guided by air to the coil 101.

The generator 100 in Fig. 3b may also be configured with two or more coils. For example, a second coil 101 may be wound around the magnet part at an angle to the first coil.

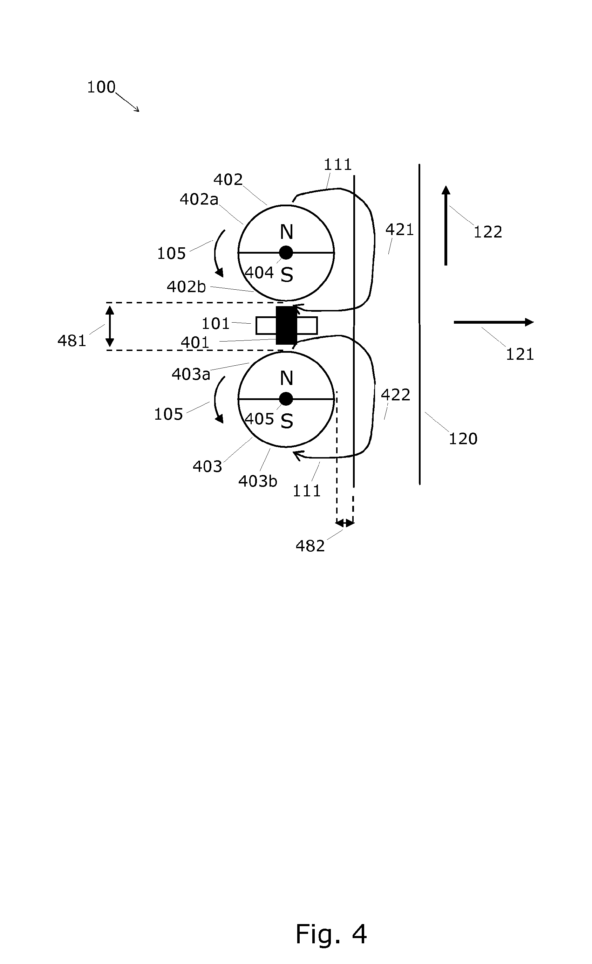

Fig. 4 shows an embodiment of the generator 100 which comprises first and second magnet parts 402, 403 which are rotatably fixed relative to the coil 101 by respective first and second fixed rotation axes 404, 405. The first and second magnet parts 402, 403 are arranged adjacent to the movable part 120 so that eddy currents are generated at first and second locations 421, 422 in the moveable part adjacent to the respective first and second magnet parts 402, 403 when the moveable part moves relative to the magnet parts.

The eddy currents at the first and second locations 421, 422 caused by the magnetic fields 111 and motion of the moveable part generate magnetic fields corresponding to the principle described earlier in connection with Fig. 1a. The magnetic fields from the eddy currents at the first and second locations 421, 422 will interact with the respective first and second magnet parts 402, 403 in such a way that the magnet parts are forced to rotate.

The generator 100 may be configured so that the first and second magnet parts 402, 403 can be arranged adjacent to the moveable part. For example, the first and second magnet parts 402, 403 may be positioned along a circular direction along a part of the moveable part, e.g. along a part of the rim or along a circular direction of a disc brake. Alternatively or additionally, the first and second magnet parts 402, 403 could be positioned along a radial direction, e.g. of a brake disc. Since the north pole N,402a, of the first magnet part 402 attracts the south pole S, 403b of the second magnet part 403, and the south pole S,402b of the first magnet part 402 attracts the north pole N,403a of the second magnet part 403, the first and second magnet parts will rotate in a synchronized manner so that a pole 402a, 402b of the first magnet part will face a pole 403a, 403b of opposite magnetic polarity when poles are adjacent.

Even though a coil may be placed between the first and second magnet parts 402, 403, the configuration of the generator 100 in Fig. 4 may additionally be provided with one or more additional coils, e.g. located to the left of the magnet parts (in the illustrated plane).

The coil 101 may be arranged between the first and second magnet parts 402, 403 so that at some point in time when the first and second magnet parts 402, 403 rotate due to interaction with the magnetic fields generated by the eddy currents, the north pole N,402a of the first magnet 402 will face one end of the coil and the south pole S,403b of the second magnet 403 will face the other end of the coil. The ends of the coil correspond to the poles of the coil. By placing the coil between two rotatable magnet parts 402,403 it is possible to generate larger currents in the coil since the variations in the magnetic field in the coil are at least twice as large as compared to a solution wherein the coil is not sandwiched between two magnet parts 402,403.

The first and second magnet parts 402,403 are separated by a minimum distance 481 between facing poles, and the first and second magnet parts are separated from the movable part 120 by a minimum distance 482. The first and second magnet parts 402,403 may be separated by the distance 481 so that a braking torque exerted by the first magnet part 402 on the second magnet part 403 is lower - e.g. 5-30 percent lower - than the driving torque exerted by the magnetic fields from the eddy currents on the first or second magnet part 402,403.

The ratio of distances 481,482 depends on the magnetic strength of the magnetic poles of the magnet parts 402,403. For example, the distance 482 may be in the range of 1-5 mm and the distance 481 may be in the range of 3-10 mm. Generally, the minimum distance 481 between poles should be larger than the minimum distance 482 between poles and the moving part 120 - however depending on the magnetic strength of the magnet part 402, 403.

In an embodiment the generator 100 comprises an element 401 of magnetically conducting material arranged to guide the magnetic field between a pole 402a, 402b of the first magnetic part 402 and a pole 403a,403b of the second magnetic part 403 where the winding of the coil are wound around a part of the magnetically conduction material so the magnetic field passes through the coil.

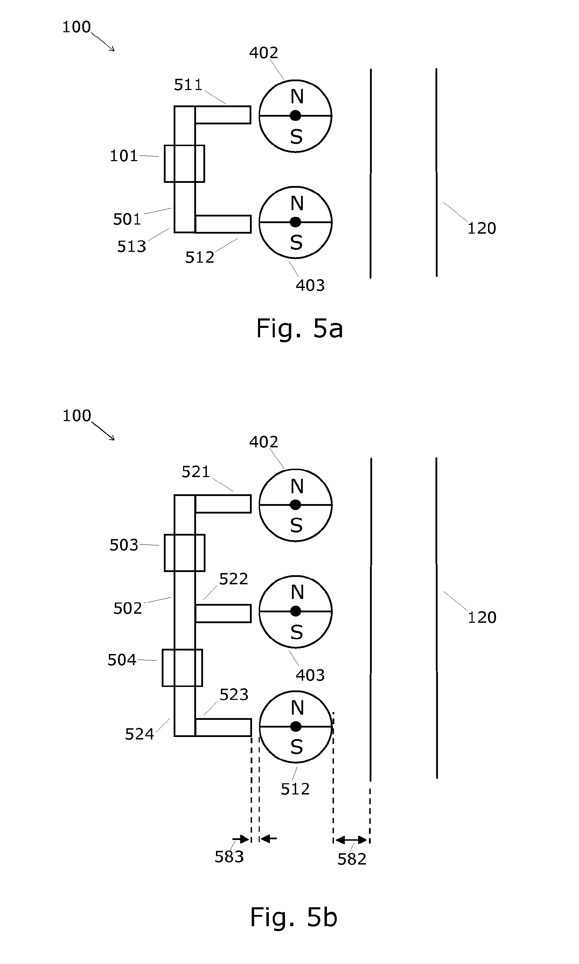

Fig. 5A shows an embodiment of the generator 100 which comprises first and second magnetic parts 402, 403 and a U-shaped element of magnetically conducting material 501. The U-shaped element comprises two legs (511, 512), each one of them projecting towards one of the magnet parts 402, 403 and a connector (513) connecting the two legs. Thus, the U-shaped element 501 is arranged to guide the magnetic field from the first magnetic part 402 via one of the legs and the connector to the second magnetic part 403 via the other leg. The winding of the coil 101 may be wound around the connector or one of the legs. Alternatively, a first coil may be wound around one of the legs and a second coil may be wound around the other leg. The first and second coils may be connected in series or in parallel.

Fig. 5B shows an example of a generator 100 which comprises a first, a second and a third magnetic part 402, 403, 512 and an E-shaped element of magnetically conducting material 502. The E-shaped element comprises three legs (521-523), each one of them projecting towards one of the magnet parts 402, 403, 512 and a connector (524) magnetically connecting the three legs. Thus, the E-shaped element 502 is arranged to guide the magnetic field from the first magnetic part 402 via one of the legs and the connector to the second magnetic part 403 and the third magnetic part 512 via the other two legs. A single coil 101 may be wound around the connector or one of the legs. Alternatively, a first coil 503 may be wound around a part of the connector at a location between first and second legs and a second coil 504 may be wound around at different part of the connector at a location between the second and third legs. The first and second coils may be connected as described in connection with Fig. 5a.

The principles of the embodiments of comprising two or more magnetic parts as described in connection with Fig. 4, Fig. 5a and Fig. 5b may also be utilized with the generator embodiment of Fig. 2 using a linearly displaceable magnet part 102. Thus, the generator may comprise two or more linearly displaceable or rotatable magnet parts with or without magnetically conducting structures for guiding the magnetic fields between magnet parts.

In order to ensure efficient power generation of the generator 100 the minimum separation 583 between the magnet part 102, 202, 402, 403, 512 and the magnetically conducting element 301, 401, 501, 502 may be between 0.3 and 0.8 mm, and the minimum separation between the magnet part 102, 202, 402, 403, 512 and the moveable part 120 may be between 1 and 5 mm. The term "minimum separation" in relation to distances 481, 482, 582, 583 refers to the minimum measureable distance between two structures.

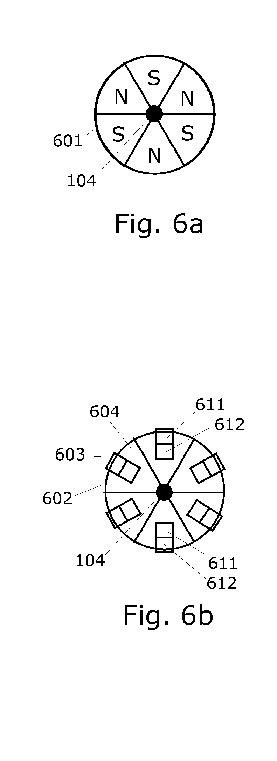

The rotatable magnet part 102, 402, 403, 512 of any of the embodiments of the generator 100 may comprise two or more poles. Fig. 6A shows an example of a rotatable magnet part 601 comprising three north poles and three south poles.

Fig. 6A shows that the rotatable magnet part 601 has a circular outer circumference (in a plane perpendicular to the rotation axis 104) and that each of the magnetic poles, i.e. magnets, in the magnet part 601 are rounded along the outer circumference of the magnet part 601 so as to form the circular outer circumference of the magnet part 601. Fig. 6A also shows that the rounding-radius of the individual magnets is equal or substantially equal to the radius of the circular outer circumference of the magnet part 601. Fig. 6A also shows that the rounding-radius of the individual magnet parts is constant or substantially constant along the outer arc of the individual magnet part. Advantageously, the circular outer circumference has the effect that the distance between the circular outer circumference and the electrically conducting moveable part 120 is constant or substantially constant, in operation of the generator 100, irrespective of the angular position of the magnet part 601.

Fig. 6A further shows that the rotatable magnet part 601 is constructed from adjoining individual magnets, i.e. the magnetic poles or magnets in the magnet part 601 are located adjacent to each other.

As indicated in Fig. 6A there is no separation or substantially no separation between two adjoining magnets. That is, the distance from a surface of one the magnets to a surface of an adjoining magnet (of opposite magnetic polarity) is zero or substantially zero. In practice a thin layer of adhesive may be present between the surfaces of adjoining magnets so that the distance between surfaces is not exactly zero due to the layer of adhesive.

Fig. 6B shows a practical embodiment of a rotatable magnet part 602 which is made from a plurality of magnets 603 comprising a north pole 611 and a south pole 612, a body 604 and an axis 104. The body 604 may be made of non-magnetically conducting material such as plastic or preferably from a magnetically conducting material. The magnets 603 may be fixed to the body 604 by inserting them into holes in the body 601 or by embedding the magnets 603 in the body 604.

In contrast to the embodiment in Fig. 6B, the embodiment in Fig. 6A does not contain a body to which the magnets 603 are fixed or attached. Instead the rotatable magnet part 601 in Fig. 6A is configured from individual magnets attached to each other, e.g. by connecting adjoining magnets by use only of an adhesive, so that the connected magnets forms a magnet part 601 which is self-supported, i.e. which does not require other supporting structures for holding the magnets in place (except possibly of adhesive applied between magnets).

Fig. 6A shows that the magnet part 601 may be configured with a hole in the center for supporting an axis 104.

In general the magnet part may have a number of individual magnets equal to an integer multiple of two, e.g. 2, 4, 6, 8 or more magnets. Each pole in the magnet part, e.g. a pole S, is in the form of a magnet having a south and a north pole. For convenience, only the outermost pole is illustrated in Fig. 6a.

In general a magnetic north pole N is arranged opposite, i.e. at an angle of 180 degrees, to a magnetic south pole. The rotation axis 104 is arranged so that it extends between the poles and preferably in the center of the rotatable magnet part 102, 402, 403, 512, 601, 602.

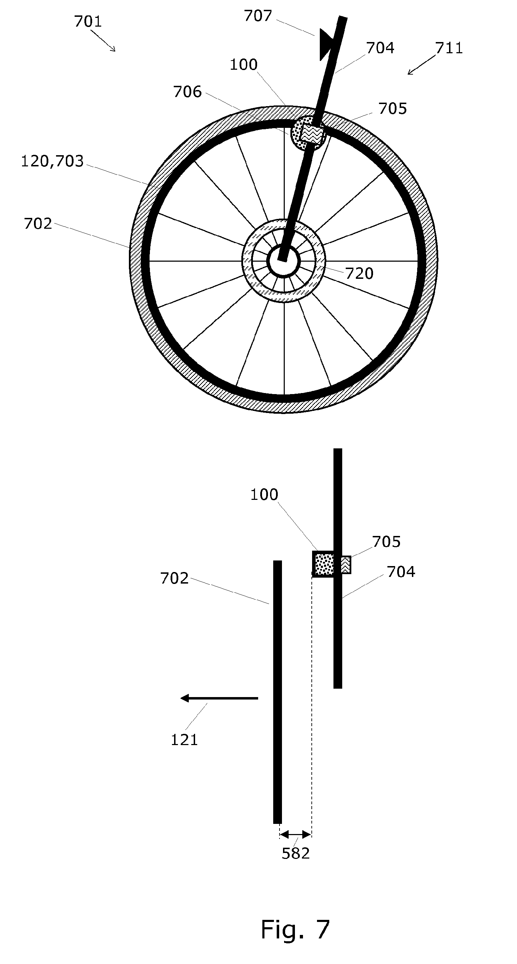

Fig. 7 (upper part) illustrates a bicycle 701 (here only the fork and front wheel of the bicycle is shown for convenience). The bicycle 701 comprises the generator 100 and the moving part 120, here the moving part is the rim 703 of a wheel 702. The generator 100 may be specifically designed to be attachable to a bicycle part, e.g. the fork 704 so that the magnet part 102 of the generator 100 is located adjacent to the electrically conducting part of the moving part 120 and with a given separation 582 as illustrated in the front view in the bottom part of Fig. 7.

The generator 100 may be part of a generator system 711 which comprises the generator 100 and a fixation 705 (see Fig. 7) for fixing the generator so that the magnet part 102 is located adjacent the moving part when fixated. Accordingly, the fixation may be specifically designed to obtain a correct location and fixation of the one or more magnet parts 102 relative to the movable part 120.

Accordingly, the attachable generator 100 may be sold as a bicycle generator 100 or bicycle generator system 711 which has to be mounted in a specific way by the user in order to function properly since the function of the generator 100 depends on correct mounting relative to the moveable part 120 of the bicycle 701. The generator 100 may be sold together with mounting instructions telling the user how to mount the generator relative to the movable part 120.

Alternatively, the generator 100 may be sold together with a bicycle 701 or bicycle part (e.g. a fork 704 with an associated wheel 702). Thus, a bicycle shop or merchant may sell a bicycle having a mountable generator 100 mounted to the bicycle. Alternatively, the generator may be integrated with a part of the bicycle 701; for example, the generator 100 may be integrated into the fork 704 so that only a minor part of the generator 100 protrudes outside the fork.

Fig. 7 illustrates a brake disc 720 which can be used as an electrically conducting moveable part 120 for the generator 100. The generator 100 and brake shoe and brake mechanism is not shown in Fig. 7 in combination with the brake disc 720.

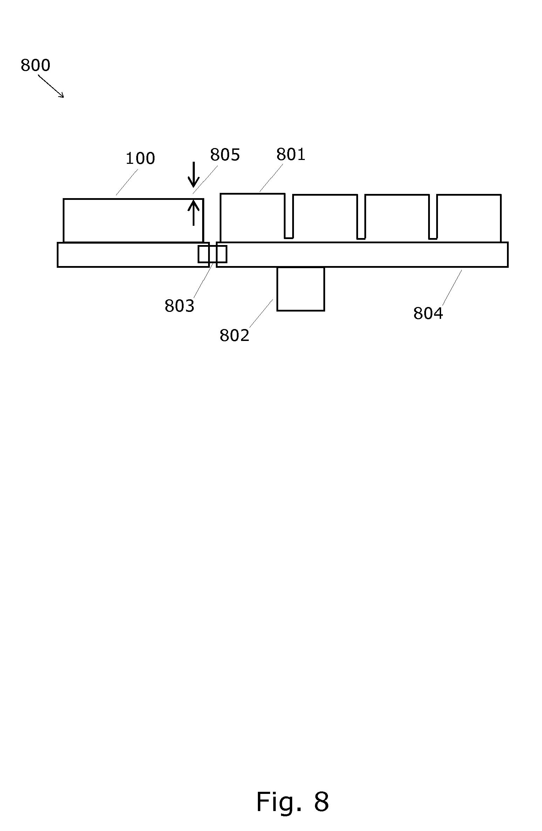

In an alternative embodiment of the bicycle part comprising the generator 100, the generator 100 may be integrated with a bicycle part being a brake shoe. Fig. 8 shows an example of a brake shoe 800 comprising the generator 100, a brake material or brake pad 801 and a fixation means 802 for fixing the brake shoe to a bicycle brake such as a rim brake (V-brake or cantilever brake) or disc brake. The brake shoe 800 may additionally comprise a light source connected with the coil of the generator 100. The brake shoe 800 may be configured as a generator 100 which is connectable with a brake shoe via a connector 803. For example, the generator 100 may be connected to a brake shoe as an extension. Alternatively, the brake shoe 800 may be configured so that the generator 100 is integrated with a brake shoe to form a single unit, e.g. by fixing both the brake material 801 and the generator to a single support 804. The brake shoe 800 may be configured with an adjusting means capable of adjusting the distance 805 between the braking surface of the brake material 801 and the surface part of the generator which is intended to face the moving part 120. Thereby the distance 582 between the generator and the moveable part 120 may be adjusted as the brake material 801 is worn.

The generator 100 may be configured as a bicycle light comprising the generator 100 and a light source such as a LED and possibly associated electrics for adapting the power output from the coil 101 to the required input electrical specifications of the light source, e.g. voltage specifications.

The light source may be integrated with the generator 100 in a common housing to form the bicycle light 706 as a single unit. Alternatively, the bicycle light 706 may be configured with a separate light emitting unit 707 comprising the light source, where the light emitting unit 707 is connected or connectable with the generator 100.

In an embodiment of the bicycle light, the light source is integrated with the generator in a common housing and the bicycle light is configured so that at least a part of the light from the light source will illuminate a wheel component of the wheel 702, e.g. a wheel component such as the rim 703, a tire, or the brake disc 720.

The illumination of the wheel component may provide characteristic light effects and additional visibility of the cyclist and, thereby, improved safety. In an embodiment the bicycle light comprises an UV light source configured to illuminate a wheel component. For improving the reflection of the UV light from the wheel component 702 the wheel component may be coated or painted with UV reflective painting to further improve the visibility.

The rotatable magnet part 102 may be disc shaped and have a diameter in the range from 5 mm to 40 mm. Magnet parts with small diameters in the range from 5 to 10 mm are preferred for the brake shoe 800. In general it may be preferred to use two or more rotatable magnet parts with relatively small diameters instead of a single rotatable magnet part with a larger diameter in order to optimize the nominal electrical power production capability of the generator 100 relative to the mass of permanent magnets used for the magnet part 102, 402, 403, 512, 601, 602.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A generator (100) for a bicycle (701), the generator comprises:
- a coil (101, 503, 504) of electrically conducting wire,
- a rotatable magnet part (102, 402, 403, 512, 601, 602) comprising a permanent magnetic north pole (N,102a) and a permanent magnetic south pole (S,102b) where the poles generate a magnetic field (111), wherein the rotatable magnet part has an circular outer circumference, wherein each of the magnetic poles in the magnet part (601) are rounded along the outer circumference of the magnet part, wherein
- the magnet part is rotatable arranged relative to the coil so that the coil will be able to generate an electric current when exposed to a change in a magnetic field from the magnet part when the magnet part rotates, and wherein
- the generator is configured for mounting adjacent to an electrically conducting moveable part (120) of the bicycle so that the movable part is able to guide at least a part of the magnetic field from the magnet part in such a way that eddy currents are generated in the moveable part when the moveable part moves relative to the magnet part and so that a magnetic field generated by the eddy currents will interact with the magnetic north and south poles in such a way that the magnet part is forced to rotate.

2. A generator for a bicycle according to claim 1, wherein the magnetic poles in the magnet part 601 are located adjacent to each other.

3. A generator for a bicycle according to claim 1, comprise two or more coils (101, 503, 504), wherein the magnet part is rotatable arranged relative to the coils so that the coils will be able to generate an electric current when exposed to a change in a magnetic field from the magnet part when the magnet part rotates.

4. A generator for a bicycle according to claim 1, wherein the electrically conducting moveable part (120) is ring or disc shaped and configured so that when the moveable part moves relative to the magnet part (102, 202, 402, 403, 512, 601, 602) the moveable part will always guide a part of the magnetic field independent of the position of the moveable part.

5. A generator for a bicycle according to claim 4, wherein the electrically conducting moveable part is a rim (703) of a wheel of the bicycle or a disc of a brake disc (720) attachable to the wheel of the bicycle.

6. A generator for a bicycle according to claim 1, further comprising an element of magnetically conducting material (301) arranged to guide the magnetic field between the north and south poles of the magnet part (102, 202, 402, 403, 512, 601, 602), where the winding of the coil are wound around a part of the element of magnetically conductive material.

7. A generator for a bicycle according to claim 1, comprising first and second magnet parts (402, 403) rotatably fixed relative to the coil by respective first and second fixed rotation axes (404, 405).

8. A generator for a bicycle according to claim 7, wherein the generator (100) is configured for mounting adjacent to the electrically conducting moveable part so that eddy currents are generated at first and second locations (421, 422) in the moveable part adjacent to the respective first and second magnet parts when the moveable part moves relative to the magnet parts

9. A generator for a bicycle according to claim 7, wherein the coil (101) is arranged between the first and second magnet parts.

10. A generator for a bicycle according to claim 9, comprising an element of magnetically conducting material (401, 501, 502) arranged to guide the magnetic field between a pole (402b, S) of the first magnetic part (402) and a pole (403a, N) of the second magnetic part (403), where the winding of the coil (101) are wound around a part of the magnetically conducting material.

11. A generator for a bicycle according to claim 10, where the element of magnetically conducting material (401, 501, 502) is U-shaped or E-shaped, where the U-shaped or E- element comprises at least two legs (511, 512, 521, 522, 523) and a connector (513, 524) connecting the two legs, where the U-shaped or E-shaped element is arranged to guide the magnetic field from the first magnetic part (402) via one of the legs to the second magnetic part (403, 512) via the other leg, and where:
a) the winding of the coil (101) is wound around the connector, or
b) the winding of a first coil (503) is wound around one of the legs or a part of the connector and the winding of a second coil (504) is wound around the other leg or another part of the connector.

12. A bicycle light (706), comprising
- a generator (100) for a bicycle according to claim 1, and
- a light source.

13. A generator system (711) comprising:
- a generator (100) for a bicycle according to claim 1,
- a fixation (705) for fixing the generator so that the magnet part is located adjacent to the moving part when fixated.

14. A brake shoe (800) for a bicycle brake, comprising
- a generator (100) according to claim 1,
- a fixation (802) for fixing the brake shoe to the bicycle brake.

15. A bicycle (701) or bicycle part (704), comprising,
- a generator (100) according to claim 1, and
- a moving part (120) according to claim 1.

16. A method for producing electric power on a bicycle, the method comprises
- fixing a generator (100) to a bicycle, the generator (100) comprises
- a coil (101, 503, 504) of electrically conducting wire,
- a rotatable magnet part (102, 402, 403, 512, 601, 602) comprising a permanent magnetic north pole (N,102a) and a permanent magnetic south pole (S,102b) where the poles generate a magnetic field (111), wherein the rotatable magnet part has an circular outer circumference, wherein each of the magnetic poles in the magnet part (601) are rounded along the outer circumference of the magnet part, and wherein
- the magnet part is rotatable arranged relative to the coil so that the coil will be able to generate an electric current when exposed to a change in a magnetic field from the magnet part when the magnet part rotates, and wherein
- the generator is configured for mounting adjacent to an electrically conducting moveable part (120) of the bicycle so that the movable part is able to guide a part of the magnetic field from the magnet part,
- operating the bicycle so that the movable part moves relative to the magnet part whereby eddy currents are generated in the moveable part and whereby a magnetic field generated by the eddy currents interacts with the magnetic north and south poles in such a way that the magnet part is forced to rotate.
